# EUROPÄISCHE PATENTANMELDUNG

(11) **EP 2 023 027 A2**
(43) Veröffentlichungstag der Anmeldung: **11.02.2009**
(21) Anmeldenummer: 08013023.0
(22) Anmeldetag: 18.07.2008
(51) Int. Cl.: F16L 33/22, F16L 37/14

(54) **Schlauchanschluss**

(30) Priorität: 09.08.2007 DE 102007037662
(71) Anmelder: Rausch und Pausch GmbH, 95100 Selb (DE)
(72) Erfinder: Gärtner, Ehrenfried, 08412 Werdau (DE); Halterman, Frank, 21258 Heidenau (DE); Wagner, Tobias, 21149 Hamburg (DE)
(74) Vertreter: Höhfeld, Jochen

(57) **Zusammenfassung**

Die vorliegende Erfindung betrifft einen Schlauchanschluss (10), insbesondere zum Anschließen eines Hydraulikschlauchs an einen Hydraulikzylinder oder einen Ventilblock. Der Schlauchanschluss (10) umfasst eine Schlauchanschlusstülle (30) zum Anschließen des Schlauchs und einen Einsteckstutzen (40) zum Einstecken in eine Durchgangsöffnung (55) eines Aufnahmeabschnitts (50) eines Gehäuses (20). Dabei umfasst der Einsteckstutzen (40) eine axiale Anlagefläche (60) zur Begrenzung der Einstecktiefe des Einsteckstutzens (40) in den Aufnahmeabschnitt (50), eine radiale Anlagefläche (70) zum Führen des Einsteckstutzens (40) in dem Aufnahmeabschnitt (50) und einen Sicherungsaufnahmebereich (80a; 80b; 80c) zum Zusammenwirken mit einer Axialsicherung (90a; 90b; 90c). Diese dient zum Sichern des Schlauchanschlusses (10) gegen eine axiale Verlagerung des Einsteckstutzens (40) aus dem Aufnahmeabschnitt (50). Der Sicherungsaufnahmebereich (80a; 80b; 80c) an dem Einsteckstutzen (40) ist innerhalb eines Bereichs der radialen Anlagefläche (70) angeordnet, um den für die Montage des Schlauchanschlusses (10) benötigten Bauraum oberhalb des Gehäuses (20) gering zu halten.

## Beschreibung

Die vorliegende Erfindung betrifft einen Schlauchanschluss, insbesondere zum Anschließen eines Hydraulikschlauchs an einen Hydraulikzylinder oder einen Ventilblock.

Ein derartiger Schlauchanschluss umfasst gewöhnlich zumindest eine Schlauchanschlusstülle zum Anschließen des Schlauchs und einen Einsteckstutzen zum Einstecken des Schlauchanschlusses in eine Durchgangsöffnung eines Aufnahmeabschnitts an einem Gehäuse. Dabei kann der Schlauchanschluss, beispielsweise mittels "Metal Injection Molding", einteilig hergestellt werden. Schlauchanschlusstülle und Einsteckstutzen können aber auch als separate Teile, beispielsweise mittels Hartlötens, verbunden werden. Aus Platzgründen sind Anschlusstülle und Einsteckstutzen in der Regel rechtwinklig zueinander angeordnet, so dass der angeschlossene Schlauch parallel zum Gehäuse geführt werden kann.

Zum Begrenzen der Einstecktiefe des Einsteckstutzens in dem Aufnahmeabschnitt und zur Führung des Einsteckstutzens in dem Aufnahmeabschnitt umfasst der Schlauchanschluss eine axiale und eine radiale Anlagefläche. Die axiale Anlagefläche wird dabei beispielsweise durch einen umlaufenden Bord oder Ansatz des Einsteckstutzens gebildet. Die radiale Anlagefläche wird beispielsweise durch eine Umfangsfläche des Einsteckstutzens gebildet. Eine Dichtung umgibt den Einsteckstutzen, um einen Austritt von Hydraulikfluid aus dem Gehäuse zu verhindern.

Der Schlauchanschluss wird in dem Aufnahmeabschnitt des Gehäuse mittels einer Sicherungseinrichtung axial gegen Herausrutschen gesichert. Dazu wird in der Regel im Bereich des Einsteckstutzens eine Sicherungsklemme seitlich auf den in dem Aufnahmeabschnitt eingesetzten Schlauchanschluss aufgeschoben und unter einer ortsfesten Arretierung des Gehäuses gehalten.

DE 28 49 133 A1 beschreibt einen Schlauchanschluss der oben geschilderten Art, bei welchem eine Sicherungsnut zum Aufschieben der Sicherungsklemme in Erstreckungsrichtung des Einsteckstutzens zwischen dem einen Ende des Einsteckstutzens, der mit der Schlauchanschlusstülle verbunden ist, und dem umlaufenden Bord des Einsteckstutzens, der die axiale Anlagefläche bereitstellt, vorgesehen ist. In die Sicherungsnut greift die Sicherungsklemme ein, die in einer Führung des Aufnahmeabschnitts des entsprechenden Gehäuses gehalten wird und dadurch den Schlauchanschluss an dem Gehäuse axial sichert. Die radiale Anlagefläche des Schlauchanschlusses ist an dem anderen Ende des Einsteckstutzens ausgebildet. Sie ist durch eine umlaufende Nut unterbrochen, in der eine O-Ring-Dichtung sitzt.

EP 1 027 185 B1 beschreibt einen einteilig ausgebildeten Schlauchanschluss, der hinsichtlich der räumlichen Anordnung von radialer und axialer Anlagefläche in Bezug zu der Sicherungsnut, in die die Sicherungsklemme eingreift, dem Schlauchanschluss aus der DE 28 49 133 A1 entspricht. Das Gehäuse besitzt eine sich dreistufig erweiternde Öffnung. Die Dichtung ist direkt in dem Gehäuse in der mittleren Stufe montiert. Darauf folgt ein Sockel, der als Aufnahmeabschnitt für den Schlauchanschluss dient und der in der darauf folgenden Stufe oberhalb der Dichtung als separates Bauteil an das Gehäuse angesetzt ist. Der Einsteckstutzen des Schlauchanschlusses erstreckt sich durch eine Durchgangsöffnung des Sockels und durch die Dichtung hindurch bis in die engste Stufe der Durchgangsöffnung des Gehäuses hinein. Diese Art der Anordnung von Gehäuse und Sockel als separate Bauteile ist aufwendig herzustellen und zu montieren.

Ein Schlauchanschluss der geschilderten Art findet seine Anwendung oft in einer räumlich beengten Einbauumgebung, beispielsweise als Schlauchanschluss für einen Hydraulikzylinder oder einen Ventilblock zum Betätigen eines Cabriodachs. Daher ist insbesondere ein Schlauchanschluss erwünscht, der platzsparend anzuordnen ist. Die bereits beschriebene rechtwinklige Anordnung von Schlauchanschlusstülle und Einsteckstutzen alleine reicht dazu nicht immer aus. Eine weitere Minimierung der Bauhöhe ist wünschenswert.

Es ist daher die Aufgabe der vorliegenden Erfindung, einen Schlauchanschluss bereitzustellen, der nur wenig Einbauraum benötigt.

Diese Aufgabe wird durch einen Schlauchanschluss mit den Merkmalen des unabhängigen Anspruchs gelöst. Vorteilhafte Ausgestaltungen und Weiterbildungen sind in den abhängigen Ansprüchen angegeben.

Der erfindungsgemäße Schlauchanschluss, insbesondere zum Anschließen eines Hydraulikschlauchs an einen Hydraulikzylinder oder einen Ventilblock, umfasst eine Schlauchanschlusstülle zum Anschließen des Schlauchs und einen Einsteckstutzen zum Einstecken des Schlauchanschlusses in eine Durchgangsöffnung eines Aufnahmeabschnitts eines Gehäuses. Dabei besitzt der Einsteckstutzen eine axiale Anlagefläche zur Begrenzung der Einstecktiefe des Einsteckstutzens in den Aufnahmeabschnitt, eine radiale Anlagefläche zum Führen des Einsteckstutzens in dem Aufnahmeabschnitt und einen Sicherungsaufnahmebereich zum Zusammenwirken mit einer Axialsicherung. Diese dient zum Sichern des Schlauchanschlusses gegen eine axiale Verlagerung des Einsteckstutzens aus dem Aufnahmeabschnitt. Der Sicherungsaufnahmebereich an dem Einsteckstutzen ist innerhalb eines Bereichs der radialen Anlagefläche angeordnet.

Aufgrund der Anordnung des Sicherungsaufnahmebereichs innerhalb des Bereiches der radialen Anlagefläche, insbesondere unterhalb der axialen Anlagefläche des Einsteckstutzens, ist es möglich, den benötigten Einbauraum für den erfindungsgemäßen Schlauchanschluss, insbesondere die Bauhöhe des Aufnahmeabschnitts von der Gehäusewandung bis zum Ansatz der Schlauchanschlusstülle, gering zu halten.

Um eine korrekte Führung und einen verkantungsfreien Sitz des Einsteckstutzens in der Durchgangsöffnung des Aufnahmeabschnitts zu gewährleisten, benötigt die radiale Anlagefläche eine gewisse Mindestausdehnung in Erstreckungsrichtung des Einsteckstutzens. Dadurch bedingt besitzt der Aufnahmeabschnitt des Gehäuses eine entsprechende Mindesthöhe. Die Mindestausdehnung der radialen Anlagefläche wird durch das Anordnen des Sicherungsaufnahmebereichs innerhalb eines Bereichs derselben nicht beeinflusst, da ein innerer Bereich der radialen Anlagefläche, der aufgrund der Anordnung des Sicherungsaufnahmebereichs eventuell wegfällt, zur Führung des Einsteckstutzens kaum einen Beitrag leistet. Die Führungsqualität der radialen Anlagefläche bleibt also dieselbe, obwohl ein Bereich der Anlagefläche zur Aufnahme der Axialsicherung benötigt wird.

Vorzugsweise ist die Schlauchanschlusstülle rechtwinklig zu dem Einsteckstutzen angeordnet. Auf diese Weise kann die Einbauhöhe des Schlauchanschlusses zusätzlich gering gehalten werden, da der Schlauch dann parallel zu der Gehäusewandung geführt werden kann.

In der Regel benötigt der Einsteckstutzen zwischen dem Sicherungsaufnahmebereich und dem freien Ende des Einsteckstutzens eine Dichtung zum Abdichten des Schlauchanschlusses gegen eine Wand der Durchgangsöffnung des Gehäuseaufnahmeabschnitts. Die Länge des Einsteckstutzens und die Bauhöhe des Aufnahmeabschnitts vergrößern sich dann jeweils um die Stärke einer solchen Dichtung. Ein entsprechender Dichtungsabschnitt kann beispielsweise ebenfalls innerhalb eines Bereichs der radialen Anlagefläche, etwa als Nut zum Einsetzen einer O-Ring-Dichtung, ausgebildet sein.

In einer bevorzugten Ausführungsform ist der Dichtungsabschnitt jedoch unterhalb der radialen Anlagefläche angeordnet. Dabei liegt die radiale Anlagefläche vorzugsweise in Erstreckungsrichtung des Einsteckstutzens zwischen der axialen Anlagefläche und dem am Ende des Einsteckstutzens angeordneten Dichtungsabschnitt. Es ist aber auch möglich, dass die axiale Anlagefläche unterhalb des Dichtungsabschnitts liegt und die radiale Anlagefläche darüber oder dass die axiale Anlagefläche zwischen der radialen Anlagefläche und dem Dichtungsabschnitt angeordnet ist. Der maximale Querschnitt des Dichtungsabschnitts ist vorzugsweise geringer ist als der minimale Querschnitt der radialen Anlagefläche und vorzugsweise verringert sich der Querschnitt des Einsteckstutzens von dem Dichtungsabschnitt zum Ende des Einsteckstutzens allenfalls. Dadurch wird eine einfache Montage der Dichtung ermöglicht. Diese kann einerseits leicht auf den Einsteckstutzen aufgeschoben werden. Andererseits ist es möglich, den Einsteckstutzen durch eine bereits in der Durchgangsöffnung des Aufnahmeabschnitts montierte Dichtung hindurch zu stecken.

Der Sicherungsaufnahmebereich am Einsteckstutzen kann als Sicherungsnut ausgebildet sein, in die eine Sicherungsklemme seitlich eingreift, die in einer geeigneten Führung in dem Aufnahmeabschnitt des Gehäuses gehalten wird. Erstreckt sich die Sicherungsnut um den gesamten Umfang des Einsteckstutzens, so kann der mit Hilfe der Sicherungsnut gesicherte Schlauchanschluss um die Längsachse des Einsteckstutzens gedreht werden, sofern Durchgangsöffnung und Einsteckstutzen einen runden Querschnitt besitzen.

In einer anderen Ausführungsform kann der Sicherungsaufnahmebereich als Öffnung in dem Einsteckstutzen zur Aufnahme eines Sicherungsstifts oder einer Sicherungsschraube ausgebildet sein. Die Öffnung kann den Einsteckstutzen dabei vollständig durchsetzen oder als Sackloch ausgeführt sein.

Schließlich kann der Sicherungsaufnahmebereich lediglich durch eine Sicherungsfläche zum Zusammenwirken mit einer Sicherungseinrichtung gebildet werden. Die entsprechende Sicherungseinrichtung, beispielsweise eine in einem Gewinde in dem Aufnahmeabschnitt des Gehäuses geführte Klemmschraube oder ein Feststellhebel, übt dabei Druck auf die Sicherungsfläche am Einsteckstutzen des Schlauchanschlusses aus.

Ein entsprechendes Gesamtsystem umfasst den vorstehend beschriebenen Schlauchanschluss sowie ein Gehäuse mit einem Aufnahmeabschnitt, der eine Durchgangsöffnung aufweist, in die der Schlauchanschluss mit seinem Einsteckstutzen so einsteckbar ist, dass die radiale Anlagefläche des Einsteckstutzens in dem Aufnahmeabschnitt geführt wird, bis der Einsteckstutzen mit seiner axialen Anlagefläche zur Anlage kommt. Ferner umfasst das System eine Axialsicherung, die angepasst ist, mit dem Gehäuse und dem Sicherungsaufnahmebereich des Schlauchanschlusses so zusammenzuwirken, dass der Schlauchanschluss gegen axiale Verlagerung aus dem Aufnahmeabschnitt des Gehäuses gesichert ist.

Ein bevorzugtes System gemäß der vorliegenden Erfindung umfasst einen Schlauchanschluss für z.B. einen Hydraulikschlauch, ein Gehäuse mit einem Sockel als Aufnahmeabschnitt für den Schlauchanschluss, eine Dichtung zum Abdichten des Schlauchanschlusses gegen eine Wand des Aufnahmeabschnitts und eine Axialsicherung zum Sichern des Schlauchanschlusses gegen axiale Verlagerung aus dem Aufnahmeabschnitt des Gehäuses. Der Gehäusesockel besitzt dabei eine Durchgangsöffnung, die eine Stufe aufweist, auf welcher die Dichtung aufliegen kann. Vorzugsweise ist der Sockel einteilig mit dem Gehäuse ausgebildet. Der Schlauchanschluss entspricht einem vorbeschriebenen, erfindungsgemäßen Schlauchanschluss.

Vorzugsweise weist der Einsteckstutzen des Schlauchanschlusses an seinem freien Ende einen Dichtungsabschnitt auf. Der maximale Querschnitt des Dichtungsabschnitts ist vorzugsweise geringer als der minimale Querschnitt der radialen Anlagefläche. Der Querschnitt des Einsteckstutzens verringert sich vorzugsweise allenfalls von dem Dichtungsabschnitt zu dem Ende des Einsteckstutzens und der Querschnitt des Dichtungsabschnitts ist so bemessen, dass der Einsteckstutzen durch eine zentrale Öffnung der Dichtung hindurch gesteckt werden kann. Ein solches System ist besonders einfach zu montieren, da zuerst die Dichtung in der Durchgangsöffnung auf der durch die Stufe gebildeten Auflageschulter angeordnet werden kann, bevor der Einsteckstutzen in die Durchgangsöffnung eingeführt wird, indem der Dichtungsabschnitt durch die Öffnung der Dichtung hindurch gesteckt wird. Schließlich wird der Schlauchanschluss mittels der Axialsicherung gegen axiale Verlagerung aus dem Gehäusesockel durch Zusammenwirken der Axialsicherung mit dem Sicherungsaufnahmebereich des Schlauchanschlusses und dem Gehäusesockel an dem Gehäuse gesichert.

Die Erfindung wird im Folgenden mit Bezug auf die begleitenden Zeichnungen beispielhaft beschrieben. Darin zeigen:
- Figur 1: eine Seitenansicht einer bevorzugten Ausführungsform eines erfindungsgemäßen Schlauchanschlusses;
- Figur 2: den Schlauchanschluss aus Fig. 1, der in einen Sockel eines im Schnitt dargestellten Gehäuses eingesteckt und mittels einer Axialsicherung gesichert ist;
- Figur 3: eine Explosionsdarstellung des Systems aus Fig. 2 in unmontiertem Zustand;
- Figur 4: das System aus Fig. 3 in montiertem Zustand in perspektivischer Ansicht;
- Figur 5: eine erste abgewandelte Ausführungsform ähnlich der in Figur 2; und
- Figur 6: eine zweite abgewandelte Ausführungsform ähnlich der in Figur 2.

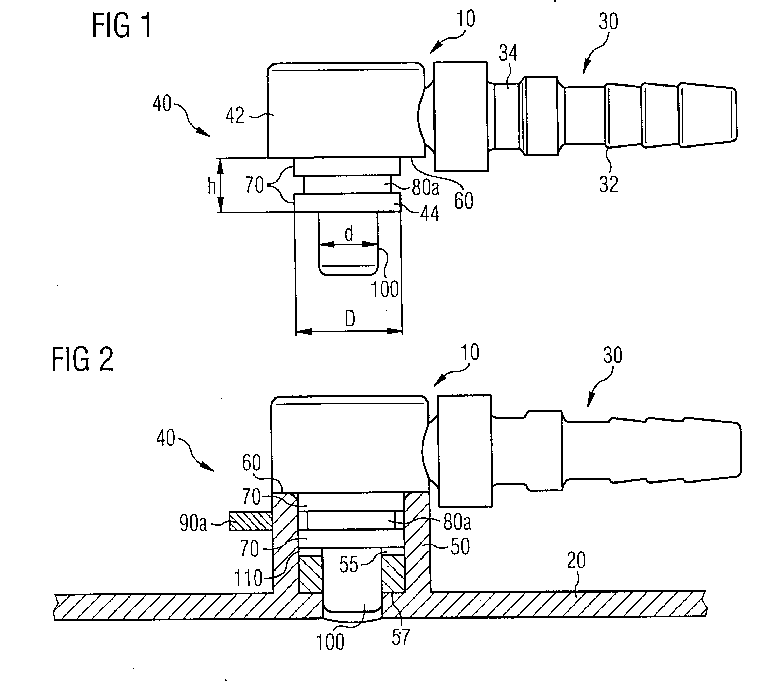

Ein Schlauchanschluss 10 für einen Hydraulikschlauch an einem Hydraulikzylinder umfasst mit Bezug auf Fig. 1 und 2 eine Schlauchanschlusstülle 30 zum Anschließen des Hydraulikschlauchs (nicht gezeigt) und einen Einsteckstutzen 40 zum Einstecken in einen Aufnahmeabschnitt 50 des Hydraulikzylinders 20. Der Schlauchanschluss kann gleichwohl zum Verbinden eines Schlauchs mit einem Gehäuse in anderen Anwendungsgebieten benutzt werden.

Die Schlauchanschlusstülle 30 besitzt Riffeln 32 zum Zurückhalten des auf die Anschlusstülle 30 aufzuschiebenden flexiblen Schlauchs und eine Sicherungsnut 34 zum Zusammenwirken mit einer zusätzlichen Schlauchsicherung (nicht gezeigt) zum Sichern des Schlauchs gegen ein Abrutschen von der Schlauchanschlusstülle 30. Ein zentraler Kanal (nicht gezeigt) zum Leiten eines Druckmediums durchsetzt die Schlauchanschlusstülle 30 in Erstreckungsrichtung.

Der Einsteckstutzen 40 besitzt an einem Ende einen als Ansatz ausgebildeten Kopf 42, der mit der Schlauchanschlusstülle 30 verbunden ist. Von dem Kopf 42 ausgehend erstreckt sich rechtwinklig zu der Schlauchanschlusstülle 30 und mit einem geringeren Durchmesser im Vergleich zu dem Kopf 42 ein Einsteckteil 44 des Einsteckstutzens 40 zum Einstecken in einen als Sockel 50 ausgebildeten Aufnahmeabschnitt des Hydraulikzylindergehäuses 20, wie es nachstehend mit Bezug auf Fig. 2 genauer beschrieben wird. Der Einsteckstutzen 40 ist ebenso wie die Schlauchanschlusstülle 30 in Erstreckungsrichtung mit einem zentralen Kanal (nicht gezeigt) versehen, der mit dem Kanal der Anschlusstülle 30 im Kopf 42 in Verbindung steht. Der Winkel, in dem Schlauchanschlusstülle 30 und Einsteckstutzen 40 zueinander angeordnet sind, kann variieren.

Am Zusammentreffen von Kopf 42 und Einsteckteil 44 besitzt der Einsteckstutzen 40 aufgrund der verschiedenen Querschnitte von Kopf 42 und Einsteckteil 44 eine axiale Anlagefläche 60. Diese dient vornehmlich zum Begrenzen der Einstecktiefe des Einsteckstutzens 40 in eine Durchgangsöffnung 55 des Gehäusesockels 50 (Fig. 2). Eine Umfangsfläche des Einsteckteils 44 dient als radiale Anlagefläche 70 zum Führen des Einsteckstutzens 40 in der Durchgangsöffnung 55 des Sockels 50. Das Einsteckteil 44 besitzt einen runden Querschnitt, sodass es sich in der Durchgangsöffnung 55 des Gehäusesockels 50, welche als Bohrung mit einem ebenfalls runden Querschnitt ausgebildet ist, um seine Längsachse drehen lässt. Andere Querschnittsformen für das Einsteckteil 44 und die Durchgangsöffnung 55 sind gleichfalls möglich. Die radiale Anlagefläche 70 erstreckt sich über eine Länge h und ist in einem inneren Bereich durch eine Sicherungsnut 80a unterbrochen. Die Sicherungsnut 80a ist zum Zusammenwirken mit einer Sicherungsklemme ausgebildet, wie es mit Bezug auf Fig. 2 nachstehend beschrieben wird.

Am anderen Ende des Einsteckstutzens 40 befindet sich ein Dichtungsabschnitt 100 zum Aufnehmen einer Dichtung 110 (Fig. 2). Der Dichtungsabschnitt 100 hat einen konstanten Durchmesser d, der geringer ist als der Durchmesser D des Einsteckstutzens 40 im Bereich der radialen Anlagefläche 70. Es ist auch möglich, den Dichtungsabschnitt 100 - wie schon die Sicherungsnut 80a - innerhalb eines Bereichs der radialen Anlagefläche 70 anzuordnen. Aus Gründen der Systemdichtigkeit muss der Dichtungsabschnitt 100 in jedem Fall unterhalb der Sicherungsnut 80a angeordnet sein. Die axiale Anlagefläche 60 kann dagegen auch an einer anderen Stelle vorgesehen sein, etwa unterhalb des Dichtungsabschnitts 100 oder zwischen dem Dichtungsabschnitt und der radialen Anlagefläche 70. Das Einsteckteil 44 ist am untersten Ende leicht angefast, um ein Einführen des Einsteckstutzens 40 in die Durchgangsöffnung 55 des Gehäusesockels 50 zu vereinfachen.

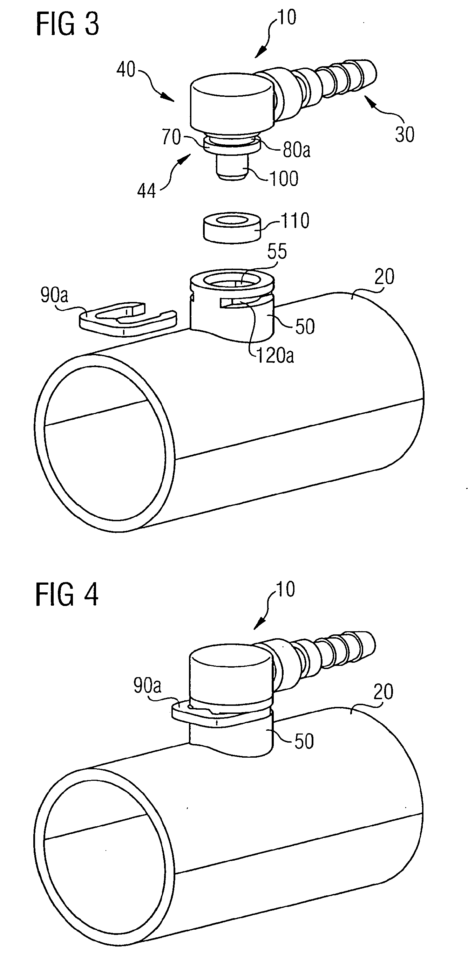

In Figur 2 ist der Schlauchanschluss 10 aus Fig. 1 in Seitenansicht zu sehen, wie er in die Durchgangsöffnung 55 des Sockels 50 eines Hydraulikzylinders 20 (im Schnitt und nur als Ausschnitt gezeigt) eingesteckt ist. Der Sockel 50 ist einteilig mit dem Hydraulikzylinder 20 ausgebildet, so dass eine separate Montage des Sockels 50 an dem Zylinder 20 entfällt. Es ist gleichfalls möglich, Sockel 50 und Zylinder 20 als separate Teile herzustellen und dann zu verbinden. Die axiale Anlagefläche 60 des Einsteckstutzens 40 begrenzt die Einstecktiefe des Einsteckstutzens 40 in die Durchgangsöffnung 55 durch Anstoßen an dem oberen Rand des Sockels 50. Die Durchgangsöffnung 55 kann in dem oberen Rand des Sockels 50 eine Fase aufweisen, um ein Einführen des Einsteckstutzens 40 zu erleichtern. Die radiale Anlagefläche 70 führt den Einsteckstutzen 40 in der Durchgangsöffnung 55. Der Einsteckstutzen 40 wird gegen eine axiale Verlagerung aus dem Sockel 50 mittels einer Sicherungsklemme 90a gesichert, die in einer Führung des Sockels 50 gehalten wird und in die Sicherungsnut 80a des Einsteckstutzens 40 tangential eingeschoben ist (siehe dazu auch Figur 3).

Die Durchgangsöffnung 55 besitzt in ihrem unteren Bereich, der an den Hydraulikzylinder 20 grenzt, eine Auflageschulter 57 für eine Dichtung 110. Die Dichtung 110 weist zentral eine Öffnung auf, durch die der Dichtungsabschnitt 100 des Einsteckteils 44 hindurch geführt wird. Diese Anordnung dient einer einfachen Montage des Systems und wird nachstehend mit Bezug auf Figur 3 genauer beschrieben.

Die Bauteile der Ausführungsform des Systems aus Figur 2 sind in Figur 3 in perspektivischer Darstellung vor der Montage gezeigt. Figur 4 zeigt das System aus Figur 3 in montiertem Zustand. Zur Montage des Schlauchanschlusses 10 in dem Sockel 50 des Zylinders 20 wird zuerst die Dichtung 110 in der Durchgangsöffnung 55 des Sockels 50 auf der Auflageschulter 57 montiert (siehe dazu Fig. 2). Danach wird das Einsteckteil 44 des Einsteckstutzens 40 in die Durchgangsöffnung 55 des Sockels 50 eingesteckt. Dabei dient die radiale Anlagefläche 70 als Führung innerhalb der Durchgangsöffnung 55, und der Dichtungsabschnitt 100 des Einsteckteils 44 wird automatisch durch die Öffnung der Dichtung 110 geführt. Er ragt bis in den Teil der Durchgangsöffnung 55 unterhalb der Dichtung 110 hinein, die den Sockel 50 mit dem Gehäuse 20 verbindet (siehe dazu Fig. 2), wird in diesem Teil der Durchgangsöffnung 55 jedoch nicht radial geführt. Das Hindurchführen des Dichtungsabschnitts 100 durch die Öffnung der Dichtung 110 bewirkt ein Abdichten des Schlauchanschlusses 10 gegen die Wand der Durchgangsöffnung 55 und gewährleistet damit die Systemdichtigkeit. Schließlich wird die Sicherungsklemme 90a in die Führung 120a des Sockels 50 eingeführt und greift tangential in die Sicherungsnut 80a des Einsteckstutzens 40 ein, wodurch dieser gegen eine axiale Verlagerung aus dem Sockel 50 gesichert wird. Die Sicherungsklemme 90a rastet beim Einführen in die Aussparung der Führung 120a des Sockels 50 - und in die Sicherungsnut 80a des Einsteckstutzens 40 - ein und wird dadurch an dem Sockel 50 gehalten und ist gegen irrtümliches Lösen davon gesichert. Der Schlauchanschluss 10 ist in gesichertem Zustand aufgrund der Form der Aussparung 120a und der Sicherungsklemme 90a gegenüber dem Zylinder 20 um die Längsachse des Einsteckstutzens 40 drehbar.

Auf diese Weise kann die Montage des Schlauchanschlusses 10 einfach und sicher erfolgen, insbesondere die Montage der Dichtung 110. Diese kann alternativ auch vor dem Einstecken des Einsteckstutzens 40 in die Durchgangsöffnung 55 auf den Dichtungsabschnitt 100 des Einsteckteils 44 aufgesteckt werden, welches dann zusammen mit der Dichtung 110 in die Durchgangsöffnung 55 eingesteckt wird.

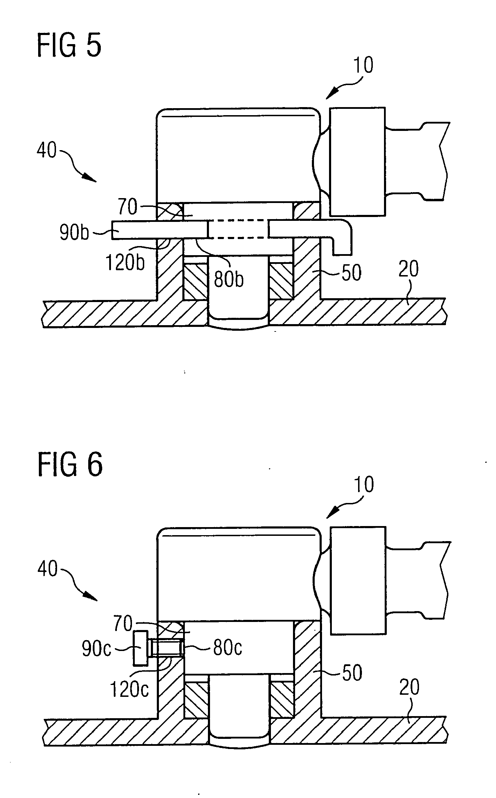

Die Figuren 5 und 6 zeigen alternative Ausführungsformen von Sicherungsaufnahmebereichen 80b, 80c des Einsteckstutzens 40 und dazugehörige Axialsicherungen 90b, 90c.

Der Schlauchanschluss 10 umfasst im Falle des Ausführungsbeispiels nach Figur 5 innerhalb eines Bereichs der axialen Anlagefläche 70 eine dezentrale durchgehende Öffnung 80b, in welche zum Sichern des Einsteckstutzens 40 ein Sicherungsstift 90b eingesteckt ist. Der Sicherungsstift 90b wird in korrespondierenden Öffnungen 120b des Sockels 50 gehalten. Alternativ zu dem Sicherungsstift 90b kann auch eine Sicherungsschraube oder dergleichen verwendet werden, wobei dazu die Öffnung 120b und/oder die Öffnung 80b mit einem Gewinde versehen sein können. Die Öffnung 80b kann alternativ auch nur bis zu einer gewissen Tiefe in den Einsteckstutzen 40 eindringen. Wesentlich ist, dass sie nicht mit dem zentralen Kanal in dem Schlauchanschluss 10 kollidiert.

Der Sicherungsaufnahmebereich 90c des Schlauchanschlusses 10 im Falle des Ausführungsbeispiels nach Fig. 6 besteht lediglich aus einer Sicherungsfläche 80c innerhalb eines Bereichs der axialen Anlagefläche 70, d.h. die radiale Anlagefläche 70 kann in dieser Ausführungsform durchgehend eben sein. Eine Klemmschraube 90c, die in einem Gewinde 120c des Sockels 50 gehalten wird, übt Druck auf die Sicherungsfläche 80c aus und sichert dadurch den Einsteckstutzen 40 gegen axiale Verlagerung aus dem Sockel 50 des Hydraulikzylinders 20. Alternativ zu der Klemmschraube 90c kann auch ein Feststellhebel, beispielsweise mit Hilfe eines Exzenters, oder dergleichen zur Anwendung kommen.

## Patentansprüche

1. Schlauchanschluss (10), insbesondere zum Anschließen eines Hydraulikschlauchs an einen Hydraulikzylinder oder einen Ventilblock, umfassend eine Schlauchanschlusstülle (30) zum Anschließen eines Schlauchs und einen Einsteckstutzen (40) zum Einstecken des Schlauchanschlusses (10) in eine Durchgangsöffnung (55) eines Aufnahmeabschnitts (50) eines Gehäuses (20), wobei der Einsteckstutzen (40) eine axiale Anlagefläche (60) zur Begrenzung der Einstecktiefe des Einsteckstutzens (40) in den Aufnahmeabschnitt (50), eine radiale Anlagefläche (70) zum Führen des Einsteckstutzens (40) in dem Aufnahmeabschnitt (50) und einen Sicherungsaufnahmebereich (80a; 80b; 80c) zum Zusammenwirken mit einer Axialsicherung (90a; 90b; 90c) zum Sichern des Schlauchanschlusses (10) gegen axiale Verlagerung aus dem Aufnahmeabschnitt (50) umfasst, **dadurch gekennzeichnet, dass** der Sicherungsaufnahmebereich (80a; 80b; 80c) an dem Einsteckstutzen (40) innerhalb des Bereichs der radialen Anlagefläche (70) angeordnet ist.

2. Schlauchanschluss (10) nach Anspruch 1, **dadurch gekennzeichnet, dass** der Einsteckstutzen (40) zwischen dem Sicherungsaufnahmebereich (80a; 80b; 80c) und dem freien Ende des Einsteckstutzens (40) einen Dichtungsabschnitt (100) zum Zusammenwirken mit einer Dichtung (110) zum Abdichten des Schlauchanschlusses (10) gegen eine Wand des Aufnahmeabschnitts (50) umfasst.

3. Schlauchanschluss (10) nach Anspruch 2, **dadurch gekennzeichnet, dass** die radiale Anlagefläche (70) zwischen der axialen Anlagefläche (60) und dem Dichtungsabschnitt (100) angeordnet ist.

4. Schlauchanschluss (10) nach Anspruch 2 oder 3, **dadurch gekennzeichnet, dass** der Dichtungsabschnitt (100) einen maximalen Querschnitt besitzt, der geringer ist als der minimale Querschnitt der radialen Anlagefläche (70) und dass sich der Querschnitt des Einsteckstutzens (40) vom Dichtungsabschnitt (100) zum Ende des Einsteckstutzens (40) allenfalls verringert.

5. Schlauchanschluss (10) nach einem der Ansprüche 1 bis 4, **dadurch gekennzeichnet, dass** der Sicherungsaufnahmebereich (80a) als Sicherungsnut ausgebildet ist.

6. Schlauchanschluss (10) nach einem der Ansprüche 1 bis 4, **dadurch gekennzeichnet, dass** der Sicherungsaufnahmebereich (80b) als Öffnung für einen Sicherungsstift (90b) oder eine Sicherungsschraube ausgebildet ist.

7. Schlauchanschluss (10) nach einem der Ansprüche 1 bis 4, **dadurch gekennzeichnet, dass** der Sicherungsaufnahmebereich (80c) als Sicherungsfläche zum Zusammenwirken mit einer Druck ausübenden Sicherungseinrichtung (90c) ausgebildet ist.

8. Schlauchanschluss (10) nach einem der Ansprüche 1 bis 7, **dadurch gekennzeichnet, dass** die Schlauchanschlusstülle (30) rechtwinklig zu dem Einsteckstutzen (40) angeordnet ist.

9. System, umfassend
- einen Schlauchanschluss (10) nach einem der Ansprüche 1 bis 7,
- ein Gehäuse (20) mit einem Aufnahmeabschnitt (50), der eine Durchgangsöffnung (55) aufweist, in die der Schlauchanschluss (10) mit seinem Einsteckstutzen (40) so einsteckbar ist, dass die radiale Anlagefläche (70) des Einsteckstutzens (40) in dem Aufnahmeabschnitt (50) geführt wird, bis der Einsteckstutzen (40) mit seiner axialen Anlagefläche (60) zur Anlage kommt, und
- eine Axialsicherung (90a; 90b; 90c), die angepasst ist, mit dem Gehäuse (20) und dem Sicherungsaufnahmebereich (80a; 80b; 80c) des Schlauchanschlusses (10) zusammenzuwirken, um den Schlauchanschluss (10) gegen axiale Verlagerung aus dem Aufnahmeabschnitt (50) des Gehäuses (20) zu sichern.

10. System nach Anspruch 9, **gekennzeichnet durch** eine Dichtung (110), wobei der Aufnahmeabschnitt (50) des Gehäuses (20) eine Auflageschulter (57) für die Dichtung (110) aufweist.

11. System nach Anspruch 9 oder 10, **dadurch gekennzeichnet, dass** der Aufnahmeabschnitt (50) und das Gehäuse (20) einteilig ausgebildet sind.
